# EUROPÄISCHE PATENTANMELDUNG

(11) **EP 1 298 678 A2**
(43) Veröffentlichungstag der Anmeldung: **02.04.2003**
(21) Anmeldenummer: 02020760.1
(22) Anmeldetag: 16.09.2002
(51) Int. Cl.: G21K 1/02

(54) **Verfahren zur Herstellung eines Streustrahlenrasters oder Kollimators**

(30) Priorität: 28.09.2001 DE 10147947
(71) Anmelder: SIEMENS AKTIENGESELLSCHAFT, 80333 München (DE)
(72) Erfinder: Eidam, Rico, 04657 Langensteinbach (DE); Hoheisel, Martin, Dr., 91056 Erlangen (DE); Schäfer, Martin, 10557 Berlin (DE); Sklebitz, Hartmut, 91056 Erlangen (DE); Strattner, Peter, Dr., 91560 Heilsbronn (DE)

(57) **Zusammenfassung**

Die vorliegende Erfindung betrifft ein Verfahren zur Herstellung eines Streustrahlenrasters oder Kollimators, der für eine auftreffende Strahlungsart durchlässige Bereiche (5) und undurchlässige Bereiche (6) vorgebbarer Geometrie aufweist. Bei dem Verfahren wird die Geometrie der durchlässigen (5) und der undurchlässigen Bereiche (6) des Streustrahlenrasters oder Kollimators zunächst festgelegt. Auf Basis dieser Geometrie wird ein Grundkörper (16) entsprechend der ggf. um eine bestimmte Schichtdicke abweichenden Geometrie der durchlässigen Bereiche (5) oder der undurchlässigen Bereiche (6) mittels einer Rapid Prototyping Technik durch schichtweise Verfestigung eines Aufbaumaterials unter Einwirkung von Strahlung aufgebaut. Auf Basis dieses Grundkörpers (16) wird schließlich der Streustrahlenraster oder der Kollimator fertig gestellt.

Das vorliegende Verfahren ermöglicht die einfache und kostengünstige Herstellung von Streustrahlenrastern oder Kollimatoren mit sehr filigranen Absorptionsstrukturen. Dies ermöglicht eine bessere Ausnutzung der Primärstrahlung bei der Aufnahme eines Bildes.

## Beschreibung

Die vorliegende Erfindung betrifft ein Verfahren zur Herstellung eines Streustrahlenrasters oder Kollimators, insbesondere für Röntgen- oder Gammastrahlung.

In der Röntgenbildtechnik werden heutzutage hohe Anforderungen an die Bildqualität der Röntgenaufnahmen gestellt. Bei derartigen Aufnahmen, wie sie insbesondere in der medizinischen Röntgendiagnostik durchgeführt werden, wird ein zu untersuchendes Objekt von Röntgenstrahlung einer annähernd punktförmigen Röntgenquelle durchleuchtet und die Schwächungsverteilung der Röntgenstrahlung auf der der Röntgenquelle gegenüberliegenden Seite des Objektes zweidimensional erfasst. Auch eine zeilenweise Erfassung der durch das Objekt geschwächten Röntgenstrahlung kann bspw. in Computertomographie-Anlagen vorgenommen werden. Als Röntgendetektoren kommen neben Röntgenfilmen und Gasdetektoren zunehmend Festkörperdetektoren zum Einsatz, die in der Regel eine matrixförmige Anordnung optoelektronischer Halbleiterbauelemente als lichtelektrische Empfänger aufweisen. Jeder Bildpunkt der Röntgenaufnahme sollte idealerweise die Schwächung der Röntgenstrahlung durch das Objekt auf einer geradlinigen Achse von der punktförmigen Röntgenquelle zu den dem Bildpunkt entsprechenden Ort der Detektorfläche entsprechen. Röntgenstrahlen, die von der punktförmigen Röntgenquelle auf dieser Achse geradlinig auf den Röntgendetektor auftreffen werden als Primärstrahlen bezeichnet.

Die von der Röntgenquelle ausgehende Röntgenstrahlung wird im Objekt jedoch aufgrund unvermeidlicher Wechselwirkungen gestreut, so dass neben den Primärstrahlen auch Streustrahlen, sog. Sekundärstrahlen, auf den Detektor auftreffen. Diese Streustrahlen, die in Abhängigkeit von Eigenschaften des Objektes bei diagnostischen Bildern bis über 90% der gesamten Signal-Aussteuerung eines Röntgendetektors verursachen können, stellen eine zusätzliche Rauschquelle dar und verringern daher die Erkennbarkeit feiner Kontrastunterschiede. Dieser wesentliche Nachteil der Streustrahlung ist dadurch begründet, dass aufgrund der Quanteneigenschaft der Streustrahlung ein signifikanter zusätzlicher Rauschanteil in der Bildaufnahme verursacht wird.

Zur Verringerung der auf die Detektoren auftreffenden Streustrahlungsanteile werden daher zwischen dem Objekt und dem Detektor sog. Streustrahlenraster eingesetzt. Streustrahlenraster bestehen aus regelmäßig angeordneten, die Röntgenstrahlung absorbierenden Strukturen, zwischen denen Durchgangskanäle oder Durchgangsschlitze für den möglichst ungeschwächten Durchgang der Primärstrahlung ausgebildet sind. Diese Durchgangskanäle bzw. Durchgangsschlitze sind bei fokussierten Streustrahlenrastern entsprechend dem Abstand zur punktförmigen Röntgenquelle, d. h. dem Abstand zum Fokus der Röntgenröhre, auf den Fokus hin ausgerichtet. Bei nicht fokussierten Streustrahlenrastern sind die Durchgangskanäle bzw. Durchgangsschlitze über die gesamte Fläche des Streustrahlenrasters senkrecht zu dessen Oberfläche ausgerichtet. Dies führt jedoch zu einem merklichen Verlust an Primärstrahlung an den Rändern der Bildaufnahme, da an diesen Stellen ein größerer Teil der einfallenden Primärstrahlung auf die absorbierenden Bereiche des Streustrahlenrasters trifft.

Zur Erzielung einer hohen Bildqualität werden sehr hohe Anforderungen an die Eigenschaften von Röntgen-Streustrahlenrastern gestellt. Die Streustrahlen sollen einerseits möglichst gut absorbiert werden, während andererseits ein möglichst hoher Anteil an Primärstrahlung ungeschwächt durch den Streustrahlenraster hindurchtreten soll. Eine Verminderung des auf die Detektorfläche auftreffenden Streustrahlenanteils lässt sich durch ein großes Verhältnis der Höhe des Streustrahlenrasters zur Dicke bzw. dem Durchmesser der Durchgangskanäle oder Durchgangsschlitze, d. h. durch eine hohes Schachtverhältnis, erreichen. Wegen der Dicke der zwischen den Durchgangskanälen oder Durchgangsschlitzen liegenden absorbierenden Struktur- oder Wandelemente kann es jedoch zu Bildstörungen durch Absorption eines Teils der Primärstrahlung kommen. Gerade beim Einsatz von Festkörperdetektoren führen Inhomogenitäten der Raster, d. h. Abweichungen der absorbierenden Bereiche von ihrer Ideallage, zu Bildstörungen durch eine Abbildung der Raster im Röntgenbild. Zum Beispiel besteht bei matrixförmig angeordneten Detektorelementen die Gefahr, dass die Projektion der Strukturen von Detektorelementen und Streustrahlenraster miteinander interferieren. Dadurch können störende Moiré-Erscheinungen auftreten.

Zur Minimierung von Bildstörungen durch Streustrahlenraster ist es bekannt, die Raster während der Aufnahme in lateraler Richtung zu bewegen. Bei sehr kurzen Belichtungszeiten von bspw. 1 - 3 ms können aber auch hier durch ungenügende Bewegungsgeschwindigkeit der Raster Streifen im Bild auftreten. Auch bei sehr langen Belichtungszeiten können störende Streifen durch die Umkehr der Raster-Bewegungsrichtung während der Belichtung auftreten.

Ein besonderer Nachteil bei allen bekannten Streustrahlenrastern besteht darin, dass die absorbierenden Strukturelemente nicht beliebig dünn und präzise gefertigt werden können, so dass in jedem Falle ein signifikanter Teil der Primärstrahlung durch diese Strukturelemente weggenommen wird.

Die gleiche Problematik stellt sich in der Nuklearmedizin, insbesondere bei der Anwendung von Gamma-Kameras, wie bspw. Anger-Kameras. Auch bei dieser Aufnahmetechnik muss ähnlich wie in der Röntgendiagnostik darauf geachtet werden, dass möglichst wenig gestreute Gammaquanten den Detektor erreichen. Im Gegensatz zur Röntgendiagnostik befindet sich bei der Nukleardiagnostik die Strahlungsquelle für die Gamma-Quanten im Inneren des Objektes. Dem Patienten wird hierbei ein mit bestimmten, instabilen Nukliden markiertes Stoffwechselpräparat injiziert, das sich dann organspezifisch anreichert. Durch den Nachweis der entsprechend aus dem Körper emittierten Zerfallsquanten wird dann ein Abbild des Organs erhalten. Der zeitliche Verlauf der Aktivität im Organ lässt Rückschlüsse auf dessen Funktion zu. Für den Erhalt eines Bildes des Körperinneren muss vor dem Gamma-Detektor ein Kollimator eingesetzt werden, der die Projektionsrichtung des Bildes festlegt. Ein derartiger Kollimator entspricht von der Funktionsweise und vom Aufbau her dem Streustrahlenraster in der Röntgendiagnostik. Nur die durch die Vorzugsrichtung des Kollimators bestimmten Gamma-Quanten können den Kollimator passieren, schräg dazu einfallende Quanten werden in den Kollimatorwänden absorbiert. Aufgrund der höheren Energie der Gamma-Quanten im Vergleich zu Röntgenquanten müssen Kollimatoren um ein Vielfaches höher ausgeführt werden als Streustrahlenraster für Röntgenstrahlung.

So können gestreute Quanten während der Bildaufnahme ausselektiert werden, indem nur Quanten einer bestimmten Energie im Bild berücksichtigt werden. Allerdings bedingt jedes detektierte Streuquant eine Totzeit der Gamma-Kamera von bspw. einer Mikrosekunde, während der keine weiteren Ereignisse registrierbar sind. Wenn daher kurz nach der Registrierung eines Streuquants ein Primärquant eintrifft, kann es nicht registriert werden und geht für das Bild verloren. Auch wenn ein Streuquant zeitlich - innerhalb gewisser Grenzen - mit einem Primärquant koinzidiert, tritt ein ähnlicher Effekt auf. Da die Auswerteelektronik dann beide Ereignisse nicht mehr trennen kann, wird eine zu hohe Energie ermittelt und das Ereignis wird nicht registriert. Die beiden angeführten Fälle erklären, dass eine hoch wirksame Streustrahlen-Unterdrückung auch in der Nukleardiagnostik zu einer verbesserten Quanteneffizienz führt. Letztlich wird dadurch eine verbesserte Bildqualität bei gleicher Dosierung des applizierten Radio-Nuklids erreicht oder bei gleicher Bildqualität eine geringere Radio-Nuklid-Dosis ermöglicht, so dass die Strahlenexposition des Patienten gesenkt und kürzere Bildaufnahmezeiten erreicht werden können.

Für die Herstellung von Streustrahlenrastern für Röntgenstrahlung und Kollimatoren für Gammastrahlung gibt es derzeit verschiedene Techniken. So sind bspw. lamellenartige Streustrahlenraster bekannt, die aus Blei- und Papier-Streifen gelegt werden. Die Bleistreifen dienen der Absorption der Sekundärstrahlung, während die zwischen den Bleistreifen liegenden Papierstreifen die Durchgangsschlitze für die Primärstrahlung bilden. Die limitierte Präzision bei der Herstellung derartiger Streustrahlenraster sowie die nicht weiter verringerbare Dicke der Bleilamellen führen jedoch auf der einen Seite zu einem unerwünschten Verlust an Primärstrahlung und auf der anderen Seite bei matrixartig angeordneten Detektorelementen eines Festkörperdetektors zu Problemen in der Bildqualität durch Moiré- und/oder Rasterstreifen.

Kollimatoren für Gamma-Kameras werden im Allgemeinen aus mechanisch gefalteten Blei-Lamellen herstellt. Dies ist eine relativ kostengünstige Lösung, hat aber den Nachteil, dass insbesondere bei Einsatz von Festkörperkameras mit matrixförmig angeordneten Detektorelementen, bspw. bei Cadmium-Zink-Tellurid-Detektoren, wegen der dann relativ groben Struktur dieser Kollimatoren störende Aliasing-Effekte auftreten können.

Für die Herstellung von Streustrahlenrastern für Röntgenstrahlung ist aus der US 5,814,235 A ein Verfahren bekannt, bei dem der Streustrahlenraster aus einzelnen dünnen Metallfolien-Schichten aufgebaut wird. Die einzelnen Metallfolien-Schichten bestehen aus einem die Röntgenstrahlung stark absorbierenden Material und werden photolithographisch mit entsprechenden Durchgangsöffnungen strukturiert. Hierfür muss ein Photoresist auf beide Seiten der jeweiligen Folie aufgebracht und über eine Photomaske belichtet werden. Anschließend erfolgt ein Ätzschritt, in dem die Durchgangsöffnungen in das Folienmaterial geätzt werden. Nach dem Entfernen der verbliebenen Photoresistschicht wird eine Adhäsionsschicht auf die geätzten Metallfolien aufgebracht. Die Metallfolien werden anschließend exakt übereinander positioniert und zur Bildung des Streustrahlenrasters miteinander verbunden. Durch eine anschließende Temperaturbehandlung wird die Struktur verfestigt. Auf diese Weise lassen sich zellenartige Streustrahlenraster mit Luftzwischenräumen als Durchgangskanälen herstellen, die für Anwendungen in der Mammographie und der allgemeinen Radiographie geeignet sind. Die photolithographische Ätztechnik ermöglicht hierbei eine präzisere Festlegung der absorbierenden und nicht absorbierenden Bereiche innerhalb des Streustrahlenrasters als dies mit Bleilamellen möglich ist. Durch Verwendung unterschiedlicher Masken von Metallfolie zu Metallfolie - mit jeweils leicht gegeneinander versetzten Durchgangsöffnungen - lassen sich auch fokussierte Streustrahlenraster mit dieser Technik herstellen. Für einen Streustrahlenraster für Röntgenstrahlung werden allerdings eine Vielzahl derartiger Metallfolien-Schichten benötigt, die wiederum eine Vielzahl unterschiedlicher Masken und Herstellungsschritte erfordern. Das Verfahren ist daher sehr zeitaufwendig und kostenintensiv.

Aus der US 6,185,278 B1 ist ein weiteres Verfahren zur Herstellung eines Streustrahlenrasters für Röntgen- und Gammastrahlen bekannt, bei dem ebenfalls einzelne Metallfolien photolithographisch geätzt und übereinander laminiert werden. Bei diesem Verfahren werden jedoch zur Herstellung eines fokussierten Streustrahlenrasters Gruppen von Metallfolien-Schichten mit exakt gleicher Anordnung der Durchgangsöffnungen zusammengefasst, wobei die nur die einzelnen Gruppen gegeneinander versetzte Durchgangsöffnungen aufweisen. Durch diese Technik wird die Anzahl an erforderlichen photolithographischen Masken für die Herstellung des Streustrahlenrasters reduziert.

Ein weiteres Verfahren für die Herstellung eines Streustrahlenrasters für Röntgenstrahlung ist aus der US 5,303,282 bekannt. Bei diesem Verfahren wird ein Substrat aus photosensitivem Material eingesetzt, das unter Einsatz einer Photomaske entsprechend der zu erzeugenden Durchgangskanäle belichtet wird. Aus diesem Substrat werden dann die Kanäle entsprechend der belichteten Bereiche herausgeätzt. Die Oberfläche des Substrates einschließlich der Innenwände der Durchgangskanäle werden mit einem die Röntgenstrahlung absorbierenden Material ausreichender Dicke beschichtet. Zur Erhöhung des Schachtverhältnisses werden ggf. mehrere derartig bearbeiteter Substrate übereinander gestapelt. Ähnliche Herstellungstechniken für die Herstellung zellulärer Streustrahlenraster für Röntgenstrahlung sind in der EP 0 681 736 B1 oder der US 5,970,118 A beschrieben. Das Ätzen von Durchgangskanälen in dickere Substrate führt jedoch zu einem Verlust an Präzision der Kanalgeometrie.

Aus der Veröffentlichung von G. A. Kastis et al., "A Small-Animal Gamma-Ray Imager Using a CdZnTe Pixel Array and a High Resolution Parallel Hole Collimator", ist ein Verfahren zur Herstellung eines zellenartig aufgebauten Kollimators für Gamma-Strahlung bekannt. Der Kollimator wird auch in diesem Fall aus laminierten Schichten aus Metallfolien, hier aus Wolfram, hergestellt, die photochemisch geätzt werden. Auch dieses Herstellungsverfahren ist somit sehr aufwendig und kostenintensiv.

Ausgehend von diesem Stand der Technik besteht die Aufgabe der vorliegenden Erfindung darin, ein Verfahren zur Herstellung eines Streustrahlenrasters oder eines Kollimators mit hohem Schachtverhältnis und sehr feinen absorbierenden Strukturelementen anzugeben, das einen verringerten Fertigungsaufwand erfordert.

Die Aufgabe wird mit dem Verfahren gemäß Patentanspruch 1 gelöst. Vorteilhafte Ausgestaltungen des Verfahrens sind Gegenstand der Unteransprüche.

Bei dem vorliegenden Verfahren wird zur Herstellung des Streustrahlenrasters oder Kollimators erfindungsgemäß eine Technik des Rapid Prototyping eingesetzt. Hierbei wird zunächst die Geometrie der durchlässigen und der undurchlässigen Bereiche des Streustrahlenrasters oder Kollimators festgelegt. Anschließend wird mittels einer Rapid-Prototyping-Technik durch schichtweise Verfestigung eines Aufbaumaterials unter Einwirkung von Strahlung, insbesondere von Laserstrahlung, ein Grundkörper entsprechend der ggf. um eine bestimmte Schichtdicke abweichenden Geometrie der durchlässigen Bereiche oder der undurchlässigen Bereiche aufgebaut. Der Grundkörper kann hierbei zusätzlich eine Grundplatte aufweisen, die ebenfalls mittels der Rapid Prototyping Technik erstellt wird. Weiterhin ist es selbstverständlich möglich, den Grundkörper auf einer getrennten, von der Bauplattform der Rapid Prototyping Anlage abnehmbaren Trägerplatte aufzubauen. Auf Basis dieses Grundkörpers wird schließlich der Streustrahlenraster oder der Kollimator erstellt bzw. fertig gestellt.

Durch den Einsatz einer Rapid Prototyping Technik beim Aufbau des Grundkörpers, der schließlich als Basis des Streustrahlenrasters oder Kollimators dient, können sehr filigrane Strukturen mit sehr hoher Genauigkeit erzeugt werden. Dies ist insbesondere für die Herstellung dünner absorbierender Bereiche bzw. Wandungen des Streustrahlenrasters oder Kollimators von Vorteil. Weiterhin lässt sich der Grundkörper auf diese Weise sehr einfach erstellen, ohne eine Vielzahl von aufwendigen Verfahrensschritten durchführen zu müssen. Der gesamte Herstellungsprozess bis zum Erhalt des fertigen Streustrahlenrasters oder Kollimators wird damit deutlich vereinfacht und lässt sich kostengünstig durchführen.

Bei der Rapid Prototyping Technik werden 3D-CAD-Konstruktionen, hier die Geometrie des Grundkörpers, in Volumendaten im CAD-System konvertiert. Das 3D-Volumenmodell für das Rapid Prototyping wird anschließend in einem Rechner in Querschnitte aufgeteilt. Die Querschnitte haben eine Schichtdicke von 100 µm oder darunter. Nach dem Übertragen der Daten auf eine Rapid Prototyping Anlage wird die ursprüngliche Form Schicht für Schicht aufgebaut. Im vorliegenden Verfahren wird dabei eine Rapid Prototyping Technik eingesetzt, bei der der Schichtaufbau durch Einwirkung von Strahlung, insbesondere durch Laserstrahlung, erfolgt. Gerade Laserstrahlung bietet hierbei den Vorteil der Erzeugung sehr filigraner Strukturen.

Der Streustrahlenraster oder Kollimator selbst kann entweder den Grundkörper als Basisstruktur enthalten oder aus diesem durch ein- oder mehrmaliges Abformen erzeugt werden. Geeignete Abformprozesse sind dem Fachmann bekannt und lassen sich einfach und kostengünstig durchführen.

Die mit dem vorliegenden Verfahren herstellbaren Streustrahlenraster oder Kollimatoren können beliebige Geometrien der für die entsprechend zu absorbierende Streustrahlung bzw. Sekundärstrahlung undurchlässigen Bereiche aufweisen. So lassen sich sämtliche der aus dem Stand der Technik bekannten Geometrien, bspw. zellenartige Strukturen oder Strukturen mit schlitzartigen Durchgangsöffnungen, realisieren. Insbesondere besteht herstellungstechnisch kein Unterschied darin, ob fokussierte oder parallele Streustrahlenraster oder Kollimatoren erzeugt werden. Für die Erzeugung von Streustrahlenrastern oder Kollimatoren mit unterschiedlichem Fokusabstand muss keinerlei Änderung irgendwelcher Masken bei der Herstellung vorgenommen werden.

Die Herstellungstechnik für die Herstellung eines Streustrahlenrasters für Röntgenstrahlung unterscheidet sich nicht von der Herstellungstechnik für die Herstellung eines Kollimators für Gammaquanten. Lediglich die für die Erzeugung der undurchlässigen Bereiche eingesetzten Materialien können sich unterscheiden. Weiterhin wird ein Gamma-Kollimator mit einer um ein Vielfaches größeren Höhe erzeugt als ein Streustrahlenraster für Röntgenstrahlung.

In einer bevorzugten Ausführungsform des vorliegenden Verfahrens wird für den Aufbau des Grundkörpers die Technik der Stereolithographie eingesetzt. Bei diesem Verfahren bildet ein computergesteuerter UV-Laserstrahl die jeweiligen Konturen der einzelnen Schichten des 3D-Volumenmodells des Grundkörpers auf einem flüssigen Polymerharz ab. Das Harz härtet durch die Einwirkung des Lasers an den belichteten Stellen bzw. Flächen aus. Dann wird die Bauteilplattform der Anlage abgesenkt und eine neue dünne Schicht Photopolymer-Harz aufgetragen. Durch Wiederholung dieser Schritte wird sukzessive die vollständige Geometrie des Grundkörpers von unten nach oben aufgebaut. Das so entstandene Bauteil kann anschließend nachgehärtet und mechanisch nachbearbeitet werden.

In einer vorteilhaften Ausführungsform des vorliegenden Verfahrens wird der Grundkörper entsprechend der um eine bestimmte Schichtdicke reduzierten Geometrie der undurchlässigen Bereiche erstellt. Anschließend wird direkt auf die zugänglichen Flächen dieses Grundkörpers eine Schicht aus einem die Streustrahlung stark absorbierenden Material entsprechend der bestimmten Schichtdicke aufgebracht, so dass die undurchlässigen Bereich somit entsprechend der gewünschten Geometrie des Streustrahlenrasters oder Kollimators gebildet werden. Die Beschichtung kann bspw. durch Sputtern einer metallischen Startschicht und anschließende galvanische Beschichtung erfolgen. Auf diese Weise ist der mittels der Rapid Prototyping Technik erzeugte Grundkörper Bestandteil des fertigen Streustrahlenrasters oder Kollimators. Es versteht sich von selbst, dass die Beschichtung auch an den inneren Seitenwandungen der Durchgangsöffnungen des Grundkörpers erfolgt.

In einer weiteren Ausführungsform wird der Grundkörper exakt entsprechend der Geometrie der durchlässigen Bereiche aufgebaut. In diesem Falle ist es erforderlich, den Grundkörper auf einer von der Bauplattform entfernbaren Trägerplatte aufzubauen oder diese Trägerplatte als Bestandteil des Grundkörpers mittels der Rapid Prototyping Technik zu erstellen. Die in dem Grundkörper entstandenen Zwischenräume, die den späteren undurchlässigen Bereichen des Streustrahlenrasters oder Kollimators entsprechen, werden anschließend mit einem die Streustrahlung stark absorbierenden Material aufgefüllt. Dieses Auffüllen erfolgt vorzugsweise durch Vergießen mit Eutektika, Legierungen oder Elementen, die vorzugsweise Blei, Zinn, Wismut, Cadmium, Indium, Quecksilber oder Gallium enthalten. Weiterhin ist es möglich, absorbierende Elemente vermischt mit oder gelöst in einem flüssigen Klebemittel mechanisch in diese Zwischenräume einzubringen. Dies kann bspw. durch Spachteln, Pressen, Gießen oder drucktechnische Verfahren erfolgen. Weiterhin kann es vorteilhaft sein, reduzierten Luftdruck oder Vakuum während der Befüllung anzuwenden, um Lufteinschlüsse zu reduzieren oder zu vermeiden.

Auf diese Weise wird ein Streustrahlenraster oder Kollimator mit Struktur- bzw. Wandungselementen aus den absorbierenden Materialien erhalten. Der Grundkörper kann anschließend entfernt werden, oder im Falle eines für die entsprechende Primärstrahlung im Wesentlichen durchlässigen Aufbaumaterials, auch zur Erhöhung der Stabilität als Bestandteil des Streustrahlenrasters oder Kollimators verbleiben.

In einer weiteren Ausführungsform wird der Grundkörper exakt entsprechend der Geometrie der undurchlässigen Bereiche aufgebaut. Dieser Grundkörper wird anschließend abgeformt, so dass eine Negativform entsteht. In dieser Negativform werden anschließend entsprechend dem vorangehenden Ausführungsbeispiel die Zwischenräume mit absorbierendem Material verfüllt. Diese Abformtechnik bietet den Vorteil, dass für die Negativform ein Material mit hoher Durchlässigkeit für die entsprechende Primärstrahlung und/oder mit hoher Stabilität eingesetzt werden kann.

Die Abformtechnik kann auch in beliebigen Abwandlungen eingesetzt werden, um bspw. eine Kopie des Grundkörpers aus dem gleichen oder einem anderen Material zu erstellen. Diese Kopie kann dann in gleicher Weise zur Herstellung des Streustrahlenrasters oder Kollimators eingesetzt werden, wie der Grundkörper in den vorangegangenen Ausführungsbeispielen selbst. Durch die Erstellung mehrerer Kopien des Grundkörpers durch jeweils zweifaches Abformen - zunächst in eine Negativform, aus der dann wiederum die Positivform abgeformt wird - läßt sich eine Vielzahl von Streustrahlenrastern oder Kollimatoren sehr schnell und kostengünstig aus einem einzigen Grundkörper, der als Master dient, herstellen. Der zeitaufwendige Prozess für die Herstellung des Master-Grundkörpers muss dann nur einmal durchgeführt werden.

Weiterhin ist es möglich, den Grundkörper entsprechend einer um eine bestimmte Schichtdicke erweiterten Geometrie der durchlässigen Bereiche zu erstellen und anschließend in eine Negativform abzuformen. Diese Negativform kann anschließend, wie beim erstgenannten Ausführungsbeispiel mit einer Schicht aus einem absorbierenden Material beschichtet werden, bis die exakte Geometrie der undurchlässigen Bereich erreicht ist.

Neben der Stereo-Lithographie als Rapid Prototyping Technik für die Erstellung des Grundkörpers lässt sich selbstverständlich auch die Technik der Mikro-Stereo-Lithographie einsetzen. Bei dieser Technik wird jede Schicht durch eine einmalige Belichtung mit einem Muster - entsprechend der zu belichtenden Bereiche - belichtet. Hierbei können bspw. Mikrospiegel-Arrays für die Erzeugung der von Schicht zu Schicht abweichenden Muster eingesetzt werden, wie dies aus dem Stand der Technik bekannt ist.

Weiterhin ist es möglich, das Verfahren des selektiven Lasersinterns oder Laserschmelzens für die Erstellung des Grundkörpers einzusetzen. Bei dieser Technik handelt es sich um ein Verfahren des lokalen Anschmelzens oder Aufschmelzens von pulverförmigem Ausgangsmaterial durch einen CO₂-Laser. Der Werkstoff wird schichtweise auf eine Bauplattform aufgebaut. Mit den Daten des 3D-Volumenmodells wird der Laserstrahl entlang des Bauteilquerschnittes der jeweiligen Schicht gesteuert. Schicht für Schicht erfolgt die Bearbeitung bzw. Verfestigung einer Schichtdicke von etwa 0,1 bis 0,2 µm. Bei der Absenkung der Bauplattform stellt der Pulverbehälter die Pulvermenge für eine weitere Schicht zur Verfügung, die mit einem entsprechenden Nivellierelement verteilt wird. Die vom Laser zugeführte Energie wird vom Pulver absorbiert und führt zu einer lokalen Verfestigung des Materials. Auf diese Weise lässt sich auch direkt ein Streustrahlenraster oder Kollimator aus dem entsprechenden absorbierenden Material aufbauen, so dass nach Fertigstellung des Grundkörpers - abgesehen von einer ggf. erforderlichen Entgratung des Grundkörpers und der Entfernung von Stützstrukturen - keine weiteren Schritte zur Fertigstellung des Streustrahlenrasters oder Kollimators mehr erforderlich sind.

Selbstverständlich sind neben den bisher genannten auch andere Rapid Prototyping Verfahren, wie beispielsweise das LAM-Verfahren (Laminated Object Maunfacturing), für die Herstellung des Streustrahlenrasters oder Kollimators gemäß der vorliegenden Erfindung einsetzbar.

Das vorliegende Verfahren wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1: schematisch die Wirkung eines Streustrahlenrasters bei der Röntgenbildaufnahme eines Objekts;
- Fig. 2: schematisch die Verhältnisse beim Einsatz eines Kollimators während der nuklearmedizinischen Aufnahme eines Objekts;
- Fig. 3: eine Darstellung zur Veranschaulichung der Technik der Stereolithographie;
- Fig. 4: eine Darstellung zur Veranschaulichung der Technik des selektiven Lasersinterns oder Laserschmelzens;
- Fig. 5: schematisch ein Beispiel für die Erzeugung eines Streustrahlenrasters oder Kollimators aus einem Grundkörper;
- Fig. 6: schematisch ein weiteres Beispiel für die Erzeugung eines Streustrahlenrasters oder Kollimators aus einem Grundkörper;
- Fig. 7: schematisch ein weiteres Beispiel für die Erzeugung eines Streustrahlenrasters oder eines Kollimators aus einem Grundkörper; und
- Fig. 8: schematisch ein Beispiel für eine mehrfache Abformung eines Grundkörpers vor der Fertigstellung des Streustrahlenrasters oder Kollimators.

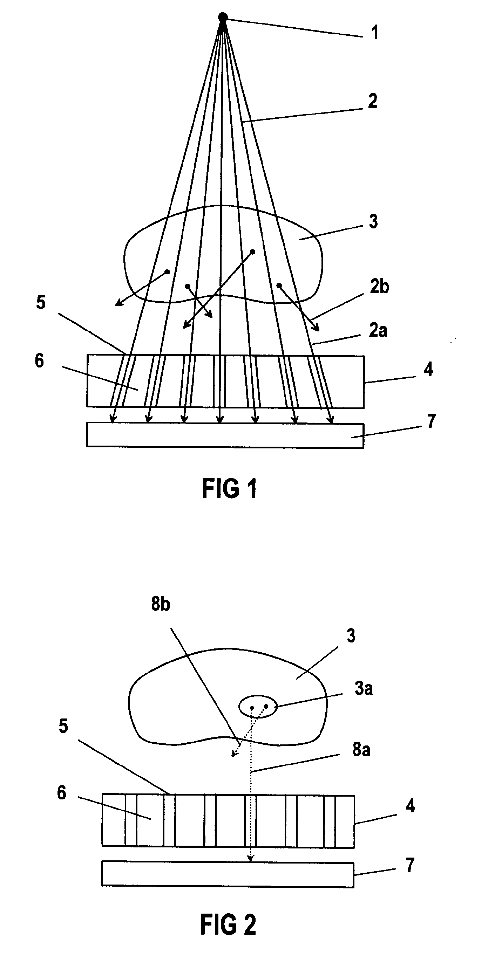

Die typischen Verhältnisse bei einer Röntgenbildaufnahme eines Objektes 3 in der Röntgendiagnostik sind anhand der Figur 1 schematisch dargestellt. Das Objekt 3 befindet sich zwischen dem Röhrenfokus 1 einer Röntgenröhre, der als annähernd punktförmige Röntgenquelle angesehen werden kann, und einer Detektorfläche 7. Die vom Fokus 1 der Röntgenquelle ausgehenden Röntgenstrahlen 2 breiten sich geradlinig in Richtung des Röntgendetektors 7 aus und durchdringen dabei das Objekt 3. Die auf der Detektorfläche 7 auftreffenden Primärstrahlen 2a, die das Objekt 3 vom Röntgenfokus 1 ausgehend geradlinig durchdringen, ergeben auf der Detektorfläche 7 eine ortsaufgelöste Schwächungswertverteilung für das Objektes 3. Ein Teil der vom Röntgenfokus 1 ausgehenden Röntgenstrahlen 2 wird im Objekt 3 gestreut. Die hierbei entstehenden Streustrahlen 2b tragen nicht zur gewünschten Bildinformation bei und verschlechtern beim Auftreffen auf den Detektor 7 das Signal-Rauschverhältnis erheblich. Zur Verbesserung der Bildqualität wird daher ein Streustrahlenraster 4 vor dem Detektor 7 angeordnet. Dieser Streustrahlenraster 4 weist Durchgangskanäle 5 und absorbierende Bereiche 6 auf. Die Durchgangskanäle 5 sind in Richtung des Röhrenfokus 1 ausgerichtet, so dass sie die eintreffende Primärstrahlung 2a auf geradlinigem Wege auf die Detektorfläche treffen lassen. Nicht in dieser Richtung einfallende Strahlen, insbesondere die Streustrahlen 2b, werden durch die absorbierenden Bereiche 6 blockiert oder erheblich geschwächt. Allerdings lassen sich die absorbierende Bereiche aufgrund der bisher bekannten Herstellungstechniken nur mit einer bestimmten Mindestdicke realisieren, so dass dadurch noch ein erheblicher Teil der Primärstrahlung 2a absorbiert wird und nicht zum Bildergebnis beiträgt.

Figur 2 zeigt die Verhältnisse bei der Bildaufnahme in der Nukleardiagnostik. In der Figur ist der zu untersuchende Körper 3 zu erkennen in dem ein Organ 3a angedeutet ist. Durch Injektion eines Gammastrahlung emittierenden Mittels, das sich in dem Organ 3a anreichert, werden aus diesem Bereich Gammaquanten 8a emittiert und treffen auf den Detektor 7, eine Anger-Kamera, auf. Durch den vor dem Detektor 7 angeordneten Kollimator 4, der geradlinig ausgerichtete Durchgangskanäle 5 zwischen Gammastrahlung absorbierenden Bereichen 6 aufweist, wird die Projektionsrichtung der jeweiligen Bildaufnahme festgelegt. In andere Richtungen emittierte oder gestreute Gammaquanten 8b, die nicht auf geradlinigem Wege aus dieser Projektionsrichtung kommen, werden vom Kollimator 4 absorbiert. Auch bei dieser Technik wird jedoch aufgrund der nicht beliebig dünnen absorbierenden Bereiche 6 noch ein beträchtlicher Teil der Primärstrahlung 8a absorbiert.

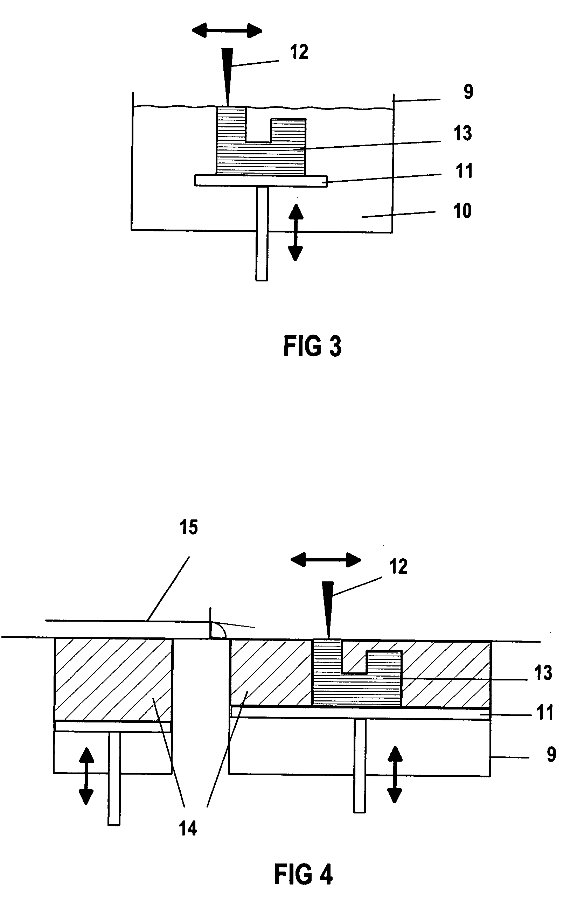

Mit der vorliegenden Erfindung wird ein Verfahren bereitgestellt, das eine sehr präzise Fertigung von Streustrahlenrastern oder Kollimatoren mit sehr dünnen absorbierenden Strukturen bzw. Trennwänden 6 zwischen den Durchgangskanälen 5 ermöglicht. Hierbei wird zur Herstellung des Streustrahlenrasters oder Kollimators eine Rapid Prototyping Technik eingesetzt. Ein Beispiel für eine derartige Technik ist die Stereolithographie, wie sie anhand der Darstellung in der Figur 3 veranschaulicht wird. Bei dieser Technik wird ein UV-Laserstrahl 12 auf die Oberfläche eines flüssigen UVvernetzbaren Polymers 10 gerichtet, der sich in einem Behältnis 9 befindet. Der UV-Laserstrahl 12 bewegt sich anhand eines dreidimensionalen Volumenmodells des zu erstellenden Grundkörpers 13 über die Oberfläche des flüssigen Polymers 10, um den Grundkörper 13 schichtweise aufzubauen. Nach der Verfestigung einer Schicht wird diese über eine Bauplattform 11 um eine weitere Schichtdicke abgesenkt, so dass der UV-Laser 12 die nächste Schicht entsprechend dem dreidimensionalen Volumenmodell verfestigen kann. Auf diese Weise wird Schicht für Schicht der Grundkörper 13 aus dem vernetzten UV-gehärteten Polymer 10 aufgebaut. Aufgrund der guten Fokussierbarkeit des UV-Laserstrahls 12 lassen sich hierbei sehr filigrane Strukturen mit sehr hoher Genauigkeit realisieren. Der Grundkörper 13 kann direkt auf der Bauplattform 11 oder auf einer zusätzlichen, in der Figur nicht dargestellten Trägerplatte aufgebaut werden, die auf der Bauplattform 11 liegt. Weiterhin lässt sich eine Grundplatte auch direkt mit der Technik der Stereolithographie aufbauen, auf der dann der Grundkörper 13 entsprechend der gewünschten Geometrie gebildet wird.

Eine weitere Technik zur Herstellung eines Grundkörpers als Basis für einen Streustrahlenraster oder einen Kollimator gemäß der vorliegenden Erfindung ist in Figur 4 dargestellt. Die Figur 4 zeigt schematisch die Vorgehensweise bei der Technik des selektiven Laserschmelzens oder Lasersinterns.

Bei dieser Technik wird ein CO₂-Laserstrahl 12 über die Oberfläche eines Werkstoffpulvers 14 geführt. Der Laser schmelzt dabei das Werkstoffpulver 14 an oder auf, so dass sich dieses nach dem Erstarren verbindet. Dieses An- bzw. Aufschmelzen erfolgt wiederum schichtweise. Nach der Erstellung einer Schicht wird die Bauplattform 11 um eine Schichtdicke abgesenkt und über einen Schieber 15 neues Werkstoffpulver 14 in der Bauebene verteilt. Anschließend wird in gleicher Weise mit dem Laser 12 die nächste Schicht verfestigt, um schließlich das Bauteil 13 Schicht für Schicht aufzubauen. Das Werkstoffpulver 14 kann ein metallisches oder ein mit einem Kunststoff beschichtetes metallisches Pulver sein.

Grundsätzlich lassen sich mit den beiden Verfahren der Figuren 3 und 4 Absorptionsstrukturen bzw. -wände 6 zwischen den Durchgangskanälen 5 erzeugen, die eine geringe Dicke von etwa 50 µm aufweisen. Durch geeignete Einstellung der Parameter ist es auch möglich, Dicken von bis zu 20 µm herab zu erreichen.

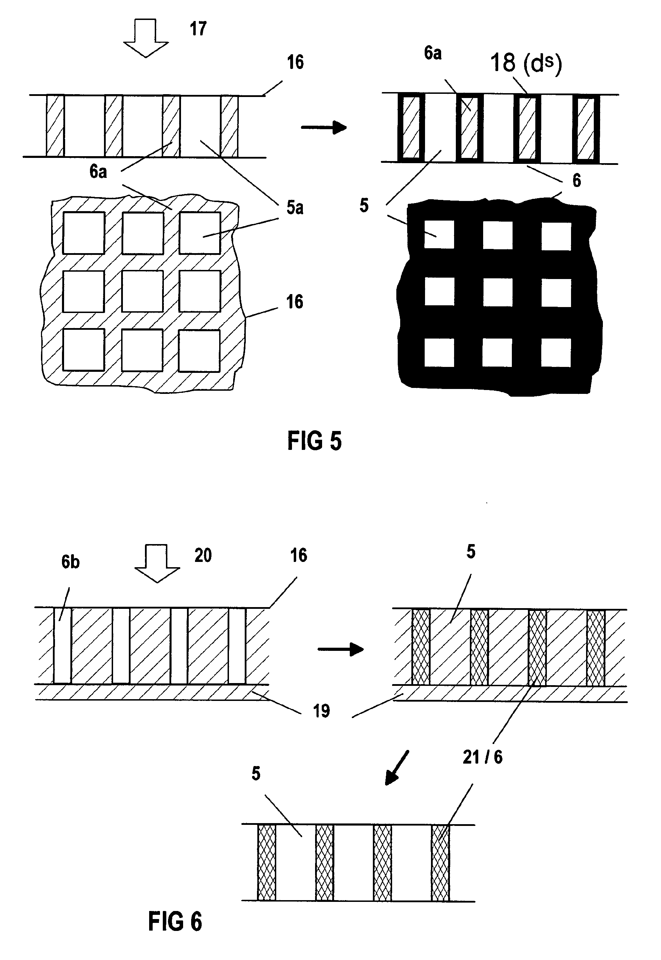

Aus einem auf diese Weise - bspw. gemäß der Techniken der Figuren 3 oder 4 - hergestellten Grundkörper lässt sich ein Streustrahlenraster oder Kollimator auf unterschiedliche Art und Weise erzeugen. Ein Beispiel hierfür ist in Figur 5 angeführt. Bei dieser Ausführungsform wird ein Grundkörper 16 entsprechend der Geometrie der um eine bestimmte Schichtdicke dₛ reduzierten Geometrie der undurchlässigen Bereiche 6 des zu erstellenden Streustrahlenrasters oder Kollimators erzeugt. Die Dicke der in diesem Beispiel dargestellten Bereiche 6a des Grundkörpers 16 aus dem Aufbaumaterial, bspw. dem UV-gehärteten Polymer, ist damit um 2*dₛ geringer als die Dicke der zu erzeugenden undurchlässigen Stege 6 des Streustrahlenrasters oder Kollimators. Das Gleiche gilt für die Höhe dieser Bereiche 6a. Ein derart hergestellter Grundkörper 16 wird anschließend mit einem absorbierenden Material hoher Ordnungszahl beschichtet (Beschichtungsschritt 17). Die Schichtdicke dieser Beschichtung 18 entspricht dabei der Schichtdicke dₛ, um die die Strukturen 6a des Grundkörpers 16 gegenüber den zu erzeugenden undurchlässigen Bereichen 6 des Streustrahlenrasters oder Kollimators verringert ausgeführt wurden. Auf diese Weise wird schließlich ein Streustrahlenraster oder Kollimator erhalten, wie er im rechten Teil der Figur 5 dargestellt ist. Die Figur zeigt jeweils einen Ausschnitt aus dem Grundkörper 16 und dem daraus erzeugten Streustrahlenraster oder Kollimator im Querschnitt (oben) und in Draufsicht (unten). Der Streustrahlenraster bzw. Kollimator setzt sich bei diesem Ausführungsbeispiel somit aus dem Grundkörper 16 mit den Bereichen 6a des Aufbaumaterials als Grundgerüst zusammen, auf dem eine absorbierende Beschichtung 18 zur Bildung der undurchlässigen Bereiche 6 aufgebracht ist. Zwischen diesen undurchlässigen Bereichen 6, die vorzugsweise dünne Stege bilden, liegen die Durchlasskanäle 5. Diese Durchlasskanäle 5 können je nach Eigenschaften des gewünschten Streustrahlenrasters oder Kollimators in Richtung des Röhrenfokus ausgerichtet sein.

Für die Aufbringung der Beschichtung 18 kann bspw. zunächst eine dünne Kupfer-Schicht durch Sputtern auf die Oberfläche der Bereiche 6a aufgebracht werden. Die Dicke dieser Kupfer-Schicht liegt im 10tel µm-Bereich. Auf diese Schicht wird schließlich durch galvanische Abscheidung eine Blei-Zinn-Legierung aufgebracht. Die Dicke dieser Legierung wird so ausgeführt, dass die nötige Absorption der Sekundärstrahlung erreicht wird.

Insbesondere für Mammographie-Anwendungen, bei denen die Energie des verwendeten Röntgenspektrums relativ niedrig ist, reicht eine sehr dünne Absorber-Schicht 18 auf den Strukturen 6a des Grundkörpers 16 aus. Bspw. wird schon mit einer 2 µm dicken Bleischicht bei mittleren Mammographie-Röntgenenergien (20 keV) eine Absorption von etwa 84% bewirkt. Bei doppelseitiger Beschichtung, wie dies beim vorliegenden Ausführungsbeispiel der Fall ist, reicht somit für die gleiche Absorption eine Dicke dₛ der Schicht 18 von 1 µm für eine gute Absorption der Sekundärstrahlung aus. Eine derart dünne Schicht hat weiterhin den Vorteil, dass sie eine signifikant verringerte Absorption der energiereicheren Primärstrahlung bewirkt, so dass eine bessere Selektivität des Streustrahlenrasters erreicht wird.

Figur 6 zeigt ein weiteres Beispiel zur Erstellung eines Streustrahlenrasters oder Kollimators aus einem Grundkörper 16. Der Grundkörper 16 wurde in diesem Fall auf eine Grundplatte 19 aufgebracht bzw. mit dieser zusammen gebildet. Der Grundkörper 16 wurde hierbei entsprechend der Geometrie der durchlässigen Bereiche 5 des zu erzeugenden Streustrahlenrasters oder Kollimators hergestellt. Da die durchlässigen Bereiche 5 in der Regel nicht zusammenhängend ausgebildet sind, ist die Grundplatte 19 für die Erstellung eines derartigen Grundkörpers erforderlich. In die Zwischenräume 6b dieses Grundkörpers 16 wird schließlich ein Material 21 hoher Ordnungszahl in flüssigem Zustand eingefüllt (Verfüllung 20), das die entsprechende Sekundärstrahlung im Wesentlichen absorbiert. Dieses Material 21, bspw. eine Blei-Zinn-Indium-Legierung, verfestigt sich nach dem Abkühlen. Auf diese Weise wird ein Streustrahlenraster oder Kollimator erhalten, der undurchlässige Bereiche, vorzugsweise als dünne Stege 6, aufweist, zwischen denen durchlässige Bereiche 5, vorzugsweise als Kanäle mit hohem Aspektverhältnis ausgebildet sind. Die Kanäle können hierbei aus dem Aufbaumaterial des Grundkörpers 16 bestehen, falls dieses für die jeweilige Primärstrahlung ausreichend durchlässig ist. In gleicher Weise kann auch die Grundplatte 19 als Bestandteil des Streustrahlenrasters oder Kollimators verbleiben, um dessen Stabilität zu erhöhen. Selbstverständlich kann das Material des Grundkörpers 16 auch anschließend entfernt werden, so dass lediglich das Gerüst aus dem absorbierenden Material 21 als Streustrahlenraster oder Kollimator verbleibt.

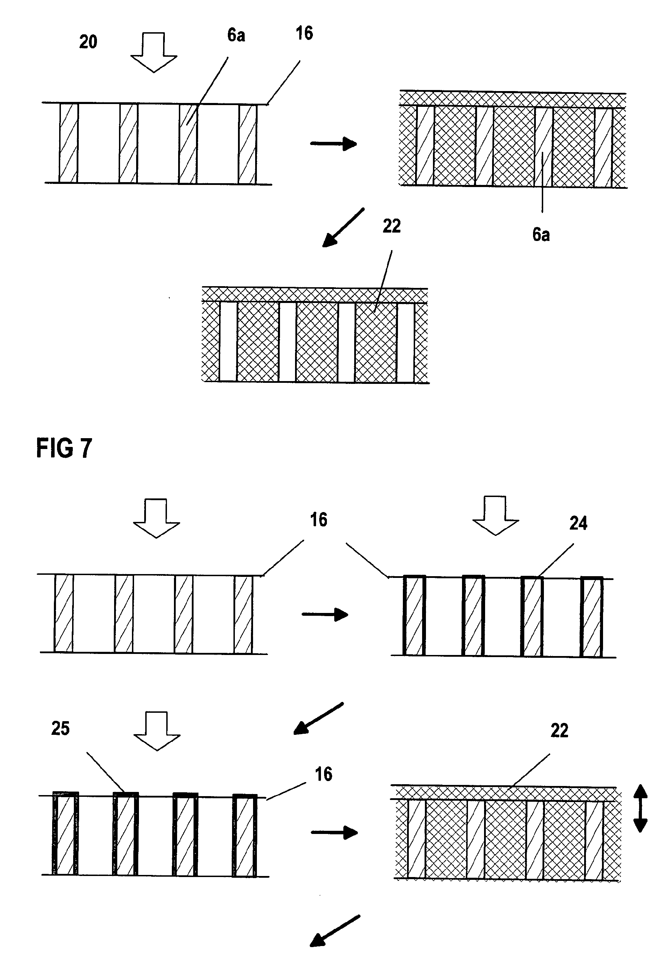

Figur 7 zeigt schließlich ein weiteres Beispiel für die Erstellung eines Streustrahlenrasters aus einem mittels einer Rapid-Prototyping-Technik hergestellten Grundkörper 16. Bei diesem Beispiel wird der Grundkörper 16 entsprechend der Geometrie der absorbierenden Bereiche 6 des Streustrahlenrasters oder Kollimators aufgebaut. Die Dicke und Höhe der Aufbaubereiche 6a entsprechen somit exakt der Dicke und Höhe der absorbierenden Bereiche oder Stege 6 des Streustrahlenrasters oder Kollimators. Dieser Grundkörper 16 wird anschließend in eine Negativform 22, bspw. durch Einfüllen oder Eingießen von Nickel, abgeformt, so dass die Materialbereiche der Negativform den Durchlassbereichen 5 des Streustrahlenrasters oder Kollimators entsprechen. Anschließend kann ein Streustrahlenraster oder Kollimator aus dieser Negativform 22 gemäß der Vorgehensweise der Figur 6 erstellt werden.

In gleicher Weise kann eine Negativform erstellt werden, die anschließend gemäß dem Ausführungsbeispiel der Figur 5 beschichtet wird. Hierfür muss der zunächst zu erstellende Grundkörper 16 entsprechend der Geometrie der um eine bestimmte Schichtdicke dₛ erweiterten Durchlassbereiche 5 aufgebaut werden. Durch die Abformung dieses Grundkörpers 16 entsteht dann eine Negativform 22, die die Form des Grundkörpers 16 der Figur 5 aufweist.

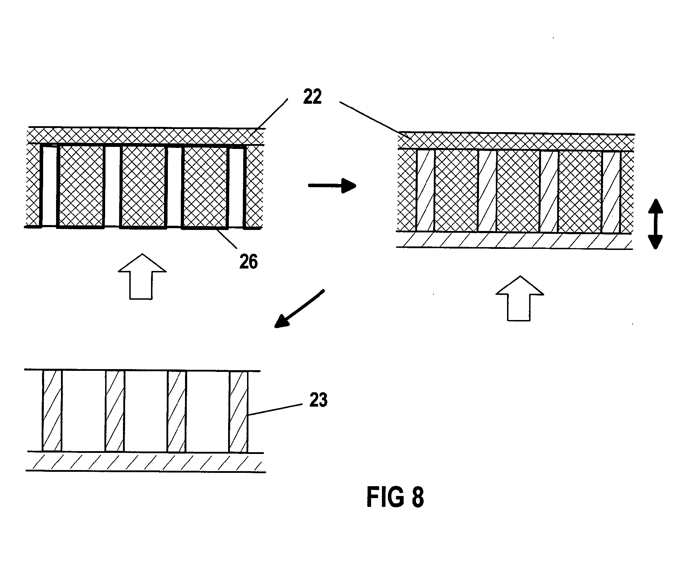

Figur 8 zeigt schließlich ein weiteres Beispiel für die Erzeugung eines Streustrahlenrasters oder Kollimators aus einer mittel Rapid Prototyping erstellten Grundform 16. In diesem Beispiel wird diese Grundform 16 zunächst in ein Negativ 22 abgeformt, das anschließend wiederum in ein Positiv 23, d. h. eine exakte Kopie des Grundkörpers 16, abgeformt wird. Diese Technik hat den Vorteil, dass aus einem Grundkörper 16 als Master nahezu beliebig viele Kopien 23 erstellt werden können, mit denen schließlich der Streustrahlenraster gebildet wird. Der zeitaufwendige Prozess des Rapid Prototyping zur Erstellung des Grundkörpers 16 muss hierbei nur einmal durchgeführt werden.

Für die Erstellung der Kopien 23 wird der Grundkörper 16, der bspw. durch Stereolithographie aus einem Polymermaterial erstellt sein kann, zunächst mit einer 80 nm dicken Titan-Adhäsionsschicht und einer 160 nm dicken Nickel-Startschicht 24 beschichtet. Diese Beschichtung erfolgt vorzugsweise durch Sputtern. Anschließend wird auf diese dünne Beschichtung eine 10 µm dicke NiP-Schicht 25 durch stromlose Abscheidung aufgebracht. Im nächsten Schritt wird Nickel galvanisch mit einer Dicke von 0,5 mm auf der entstandenen Struktur abgeschieden. Die Struktur wird hierbei auf das Nickelmaterial übertragen, das nunmehr als Negativform 22 des Grundkörpers 16 von diesem abgelöst werden kann. Die entstandene Negativform 22 wird schließlich mit einer Passivierungsschicht 26 beschichtet. Anschließend wird durch galvanische Abscheidung wiederum Nickel mit einer Dicke von 1,5 - 2,5 mm in diese Negativform 22 abgeschieden. Auf diese Weise wird eine Positivform 23 erhalten, die exakt die Struktur des ursprünglichen Grundkörpers 16 aufweist. Diese Positivform 23 wird von der Negativform 22 getrennt und kann entweder direkt als Streustrahlenraster oder Kollimator dienen oder wiederum als Gussform für die Erstellung eines derartigen Rasters oder Kollimators.

Mit den vorliegenden Ausführungsbeispielen können beispielsweise Streustrahlenraster oder Kollimatoren mit einem zellulären Raster der Abmessungen 55 mm x 95 mm x 2 mm und einer Rasterweite von 700 µm erstellt werden. Die absorbierenden Zwischenwände haben eine Dicke von 50 µm, und aus einem niedrig schmelzenden, flüssigen eutektischen Material, das hauptsächlich Blei enthält. Weiterhin können beispielsweise Streustrahlenraster oder Kollimatoren mit den gleichen Dimensionen erstellt werden, bei denen die absorbierenden Zwischenwände mit einer bleihaltigen Legierung einer Schichtdicke von 5 - 10 µm beschichtet sind.

## Patentansprüche

1. Verfahren zur Herstellung eines Streustrahlenrasters oder Kollimators, der für eine auftreffende Strahlungsart durchlässige Bereiche (5) und undurchlässige Bereiche (6) vorgebbarer Geometrie aufweist, mit folgenden Schritten:
- Festlegen der Geometrie der durchlässigen (5) und der undurchlässigen Bereiche (6) des Streustahlenrasters oder Kollimators;
- Aufbauen eines Grundkörpers (16) entsprechend der gegebenenfalls um eine bestimmte Schichtdicke abweichenden Geometrie der durchlässigen Bereiche (5) oder der undurchlässigen Bereiche (6) mittels einer Rapid Prototyping Technik durch schichtweise Verfestigung eines Aufbaumaterials unter Einwirkung von Strahlung; und
- Fertigstellen des Streustrahlenrasters oder Kollimators auf Basis des Grundkörpers (16).

2. Verfahren nach Anspruch 1,
**dadurch gekennzeichnet, dass** das Verfahren der Stereolithographie als Rapid Prototyping Technik für den Aufbau des Grundkörpers (16) eingesetzt wird.

3. Verfahren nach Anspruch 1,
**dadurch gekennzeichnet, dass** das Verfahren des selektiven Laser-Schmelzens oder Laser-Sinterns als Rapid Prototyping Technik für den Aufbau des Grundkörpers (16) eingesetzt wird.

4. Verfahren nach einem der Ansprüche 1 bis 3,
**dadurch gekennzeichnet, dass** der Grundkörper (16) entsprechend der um eine bestimmte Schichtdicke reduzierten Geometrie der undurchlässigen Bereiche (6) aufgebaut und zum Fertigstellen des Streustrahlenrasters oder Kollimators mit einem die Strahlungsart stark absorbierenden Material bis zum Erreichen der bestimmten Schichtdicke beschichtet wird, die ausreicht, um auftreffende Sekundärstrahlung der Strahlungsart nahezu vollständig zu absorbieren.

5. Verfahren nach Anspruch 4,
**dadurch gekennzeichnet, dass** das Beschichten durch Sputtern und/oder galvanische Abscheidung erfolgt.

6. Verfahren nach einem der Ansprüche 1 bis 3,
**dadurch gekennzeichnet, dass** der Grundkörper (16) entsprechend der Geometrie der durchlässigen Bereiche (5) aufgebaut und entstandene Zwischenräume (6b) zur Fertigstellung des Streustrahlenrasters oder Kollimators mit einem die Strahlungsart stark absorbierenden Material (21) befüllt werden, das sich anschließend verfestigt.

7. Verfahren nach Anspruch 6,
**dadurch gekennzeichnet, dass** das Aufbaumaterial des Grundkörpers (16) nach der Verfestigung des stark absorbierenden Materials (21) entfernt wird.

8. Verfahren nach einem der Ansprüche 1 bis 3,
**dadurch gekennzeichnet, dass** der Grundkörper (16) entsprechend der Geometrie der undurchlässigen Bereiche (6) aufgebaut und anschließend zur Bildung einer Negativform (22) abgeformt wird, in der entstandene Zwischenräume zur Fertigstellung des Streustrahlenrasters oder Kollimators mit einem die Strahlungsart stark absorbierenden Material (21) befüllt werden, das sich anschließend verfestigt.

9. Verfahren nach Anspruch 8,
**dadurch gekennzeichnet, dass** die Negativform (22) nach der Verfestigung des stark absorbierenden Materials (21) entfernt wird.

10. Verfahren nach einem der Ansprüche 1 bis 3,
**dadurch gekennzeichnet, dass** aus dem Grundkörper (16) durch mehrfaches Abformen eine Kopie (23) erstellt wird, mit der anstelle des Grundkörpers (16) die weiteren Verfahrensschritte der Ansprüche 4 bis 7 durchgeführt werden.

11. Verfahren nach Anspruch 1 oder 3,
**dadurch gekennzeichnet, dass** der Grundkörper (16) entsprechend der Geometrie der undurchlässigen Bereiche (6) aus einem die Strahlungsart stark absorbierenden Aufbaumaterial aufgebaut wird, um direkt den Streustrahlenraster oder Kollimator zu bilden.

12. Verfahren nach einem der Ansprüche 1 bis 11,
**dadurch gekennzeichnet, dass** die Geometrie der durchlässigen (5) und undurchlässigen Bereiche (6) derart festgelegt wird, dass ein fokussierender Streustrahlenraster oder Kollimator gebildet wird.

13. Verfahren nach einem der vorangehenden Ansprüche zur Herstellung eines Streustrahlenrasters für Röntgenstrahlung.

14. Verfahren nach einem der vorangehenden Ansprüche zur Herstellung eines Kollimators für Gammastrahlung.
